# EUROPEAN PATENT APPLICATION

(11) **EP 3 032 521 A1**
(43) Date of publication of application: **15.06.2016**
(21) Application number: 15198719.5
(22) Date of filing: 09.12.2015
(51) Int. Cl.: G09B 5/06, G06T 19/00, G09G 5/00, G11B 27/031

(54) **INFORMATION PROCESSING APPARATUS, METHOD OF CONTROLLING APPARATUS, AND COMPUTER PROGRAM**

(30) Priority: 10.12.2014 JP 2014249672
(71) Applicant: Seiko Epson Corporation, Shinjuku-ku Tokyo (JP)
(72) Inventor: AONUMA, Masashi, Suwa-shi, Nagano 392-8502 (JP); TAKANO, Masahide, Suwa-shi, Nagano 392-8502 (JP)
(74) Representative: Miller Sturt Kenyon

(57) **Abstract**

An information processing apparatus includes an acquisition part that acquires procedure information as information representing a series of motion procedures using virtual objects for being additionally displayed to a real world, a division part that generates divided information formed by chronological division of at least part containing time-series information of the acquired procedure information, an evaluation part that evaluates each of the divided information, and a generation part that generates new procedure information from the divided information based on a result of the evaluation.

## Description

The entire disclosure of Japanese Patent Application No. 2014-249672, filed on December 10, 2014 is expressly incorporated by reference herein.

### BACKGROUND

### 1. Technical Field

The present invention relates to an information processing apparatus.

### 2. Related Art

Work support systems that teach series of motion procedures (hereinafter, also simply referred to as "motion procedures") to users are known. For example, Patent Document 1 (JP-A-2002-230086) discloses a technology of realizing work support by combining and displaying video-imaged motions of a subject and schematic moving images of a part particularly requiring detailed explanation of the motions of the subject on one screen.

A technology called augmented reality (AR) of additionally presenting information to real objects as objects existing in the real world using a computer is known. In the augmented reality, information additionally displayed to the real objects is also called "virtual object". Realization of the work support using the technology of augmented reality is very useful because a user may be taught motion procedures represented using virtual objects for the real objects existing in front of eyes. In this regard, in the technology described in Patent Document 1, there is a problem that the video-imaged subject and motions thereof merely provide a manual and have no relationship with the real world.

### SUMMARY

To realize the work support using the technology of augmented reality for example, it is necessary to prepare the motion procedures represented using virtual objects in advance. The existing work procedures prepared in advance have had a problem of inappropriate portions and unadapted portions in part. In this case, to recreate all of the existing work procedures, a lot of trouble has been taken and expert knowledge has been required. Therefore, generation of new motion procedures from the existing motion procedures has been requested.

Accordingly, with an information processing apparatus for instance, generation of new motion procedures from the existing motion procedures represented using virtual objects has been requested.

An advantage of some aspects of the invention is to solve at least a part of the problems described above, and the invention can be implemented as the following configurations.
(1) An aspect of the invention provides an information processing apparatus. The information processing apparatus includes an acquisition part that acquires procedure information as information representing a series of motion procedures using virtual objects for being additionally displayed to a real world, a division part that generates divided information as information formed by chronological division of at least part containing time-series information of the acquired procedure information, an evaluation part that evaluates each of the divided information, and a generation part that generates new procedure information from the divided information based on a result of the evaluation.
   According to the information processing apparatus having the above described configuration, the evaluation part may evaluate the procedure information acquired by the acquisition part, and the generation part may generate new procedure information based on the result of the evaluation. The procedure information is information representing a series of motion procedures using virtual objects. Accordingly, the information processing apparatus may generate new procedure information (new motion procedures) from existing procedure information (existing motion procedures). Further, the new procedure information is generated based on the evaluation result, and therefore, reliability of the procedure information used for teaching to the user may be improved.
(2) In the information processing apparatus according to the aspect of the invention, the acquisition part may acquire a plurality of pieces of the procedure information, the division part may respectively chronologically divide at least part containing time-series information of the acquired plurality of pieces of the procedure information, and the generation part may select one piece of the divided information in response to the result of the evaluation from a collection of the divided information of the same time series, and generate new procedure information by combining the selected divided information.
   According to the information processing apparatus having the above described configuration, the generation part selects e.g. one piece of the divided information determined to be optimal in response to the result of the evaluation from the collection of the divided information of the same time series of the plurality of pieces of existing procedure information, and generates new procedure information by combining the selected divided information. As a result, the generation part may generate one better piece of new procedure information from the plurality of pieces of existing procedure information.
(3) In the information processing apparatus according to the aspect of the invention, the generation part may select one piece of the divided information in response to the result of the evaluation from a subordinate collection formed by classification of the collection of the divided information of the same time series according to at least one or more conditions, and generate new procedure information by combining the selected divided information.
   According to the information processing apparatus having the above described configuration, the generation part may select e.g. one piece of the divided information determined to be optimal in response to the result of the evaluation from the subordinate collection formed by classification of the collection of the divided information of the same time series according to at least one or more conditions. As a result, the part may select divided information that should be used as a material of new procedure information more carefully.
(4) In the information processing apparatus according to the aspect of the invention, an exemplar memory part that stores exemplary divided information as information formed by chronological division of at least part containing time-series information of exemplary procedure information is further provided, wherein the acquisition part may acquire one piece of the procedure information, and the generation part may generate new procedure information by replacing at least part of the divided information by the corresponding exemplary divided information in response to the result of the evaluation.
   According to the information processing apparatus having the above described configuration, the generation part generates new procedure information by replacing at least part of the divided information contained in one piece of existing procedure information with the exemplary divided information in response to the result of the evaluation. As a result, the generation part may correct one piece of existing procedure information using the exemplary procedure information.
(5) In the information processing apparatus according to the aspect of the invention, an exemplar memory part that stores exemplary divided information as information formed by chronological division of at least part containing time-series information of exemplary procedure information is further provided, wherein the evaluation part may evaluate the divided information by comparison with the corresponding exemplary divided information.
   According to the information processing apparatus having the above described configuration, the evaluation part may easily evaluate the divided information by comparison with the exemplary divided information.
(6) In the information processing apparatus according to the aspect of the invention, a standard memory part that stores at least one piece of standard information as information used for checking of a standard motion is further provided, wherein the evaluation part may evaluate the divided information according to whether or not the standard information stored in the standard memory part is contained within the divided information.
   According to the information processing apparatus having the above described configuration, the evaluation part may evaluate whether or not the divided information contains a standard motion using the standard memory part.
(7) In the information processing apparatus according to the aspect of the invention, the evaluation part may evaluate the divided information using at least one of a result of the motions according to the procedure information, a scoring result by a user of the information processing apparatus, a result of image recognition of the virtual objects, a self-scoring result of a creator of the procedure information.
   According to the information processing apparatus having the above described configuration, when the result of motions according to the procedure information is used, the evaluation part may evaluate the divided information using the final result obtained after the series of motions. When the scoring result by the user of the information processing apparatus is used, the evaluation part may evaluate the divided information as intended by the user. When the result of image recognition of the virtual objects is used, the evaluation part may internally evaluate the divided information by image recognition. When the self-scoring result of the creator of the procedure information is used, the evaluation part may evaluate the divided information as intended by the creator of the procedure information.
(8) In the information processing apparatus according to the aspect of the invention, the evaluation part may evaluate the divided information using a comparison result with the other divided information within the collection of the divided information of the same time series.
   According to the information processing apparatus having the above described configuration, the evaluation part may internally evaluate the divided information by comparison with the other divided information.
(9) In the information processing apparatus according to the aspect of the invention, an exemplar memory part that stores exemplary divided information as information formed by chronological division of at least part containing time-series information of exemplary procedure information is further provided, wherein the division part may divide at least part containing time-series information of the acquired procedure information by comparison with the exemplary divided information.
   According to the information processing apparatus having the above described configuration, the division part may easily divide the procedure information by comparison with the exemplary divided information.
(10) In the information processing apparatus according to the aspect of the invention, the division part may divide at least part containing time-series information of the acquired procedure information according to a magnitude of the motion in the procedure information.
   In the procedure information representing the series of motion procedures, one procedure may be separated from another procedure in a part in which the motion largely changes. According to the information processing apparatus having the above described configuration, the division part may divide the procedure information in the part in which the motion largely changes for the case.
(11) In the information processing apparatus according to the aspect of the invention, the division part may divide at least part containing time-series information of the acquired procedure information according to increases or decreases of the virtual objects in the procedure information.

In the procedure information representing the series of motion procedures, one procedure may be separated from another procedure in a part in which a new object is added or the object disappears, i.e., the objects increase or decrease. According to the information processing apparatus having the above described configuration, the division part may divide the procedure information in the part in which the objects increase or decrease for the case.

Not all of the component elements of the above described respective aspects of the invention are essential. In order to solve part or all of the above described problems or achieve part or all of the advantages described in the specification, appropriately, part of the component elements can be changed, deleted, and replaced by new component elements, and limitations can be partially deleted. Further, in order to solve part or all of the above described problems or achieve part or all of the advantages described in the specification, part or all of the above described technological features contained in one aspect of the invention can be combined with part or all of the above described technological features contained in the other aspect of the invention, and one independent aspect of the invention can be formed.

For example, one aspect of the invention can be implemented as an apparatus including part or all of the four elements of the acquisition part, the division part, the evaluation part, and the generation part. That is, the apparatus may have the acquisition part or not. Further, the apparatus may have the division part or not. Furthermore, the apparatus may have the evaluation part or not. Moreover, the apparatus may have the generation part or not. The apparatus may be implemented as e.g. an information processing apparatus, however, may be implemented as another apparatus than the information processing apparatus. Any of part or all of the technical features of the respective aspects of the above described information processing apparatus may be applied to the apparatus. For example, an apparatus as an aspect of the invention has a challenge of evaluating the motion procedures represented using the virtual objects by using e.g. the information processing apparatus. However, for the apparatus, additionally, downsizing of the apparatus, improvement in convenience, cost reduction when the apparatus is manufactured, resource saving, facilitation of manufacture, etc. are desired.

Note that the invention can be implemented in various aspects, e.g., an information processing apparatus and a control method of the information processing apparatus, a system including the information processing apparatus, a head mounted display apparatus and a control method of the head mounted display apparatus, a system including the head mounted display apparatus, an image display apparatus and a control method of the image display apparatus, a system including the image display apparatus, computer programs for implementation of these methods, apparatuses, and functions of the systems, a server apparatus for distribution of the computer programs, memory media storing the computer programs, etc.

### BRIEF DESCRIPTION OF THE DRAWINGS

Embodiments of the invention will now be described by way of example only with reference to the accompanying drawings, wherein like numbers reference like elements.
Fig. 1 is a block diagram functionally showing a configuration of an information processing apparatus according to one embodiment of the invention.
Fig. 2 is a diagram for explanation of a material memory part.
Fig. 3 is a diagram for explanation of a 3D model.
Fig. 4 is a flowchart showing procedures of scenario generation processing.
Fig. 5 shows an example of a form generated by a conversion part.
Fig. 6 is a diagram for explanation of an appearance configuration of a head mounted display apparatus.
Fig. 7 is a flowchart showing procedures of scenario generation processing in the second embodiment.

### DESCRIPTION OF EXEMPLARY EMBODIMENTS

### A. First Embodiment:

### A-1. Configuration of Information Processing Apparatus:

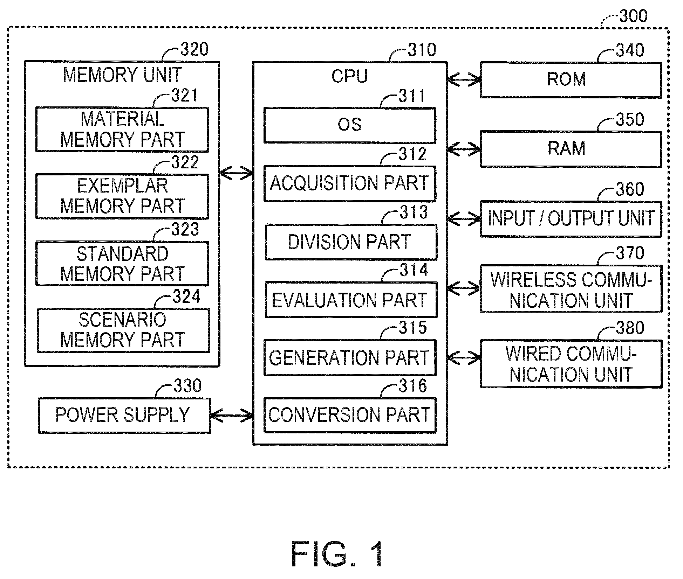

Fig. 1 is a block diagram functionally showing a configuration of an information processing apparatus according to one embodiment of the invention. The information processing apparatus 300 of the embodiment may evaluate procedure information and generate new procedure information based on a result of the evaluation by scenario generation processing, which will be described later. Hereinafter, for distinction, procedure information before scenario generation processing is also referred to as "scenario material" and new procedure information after scenario generation processing is also referred to as "scenario".

"Procedure information" of the embodiment is information used for teaching a series of motion procedures to a user using virtual objects. "Virtual object" refers to information additionally displayed to "real object" as an object existing in the real world in augmented reality (AR) processing. Here, the object refers to an arbitrary human, an arbitrary animal or plant, an arbitrary object (including an artificial object and a natural object), or the like.

"Series of motion procedures" of the embodiment widely includes procedures of motions of various categories. For example, it includes procedures of motions of a worker in factory work, procedures of motions of an athlete in sports such as tennis, procedures of motions of a maker in cooking or sewing, etc. Further, the motion procedures also include procedures of thinking motions without body motions of a user such as procedures of thinking as a thinking process and procedures of thinking in a learning process. These procedures of motions may be continuous or discontinuous at fixed intervals. Or, the procedures of motions may include information not representing procedures (models, images, character strings, figures, signs, sound, other arbitrary data, etc.).

The information processing apparatus 300 may be implemented by e.g. a personal computer. The information processing apparatus 300 includes a CPU 310, a memory unit 320, a power supply 330, a ROM 340, a RAM 350, an input/output unit 360, a wireless communication unit 370, and a wired communication unit 380, and the respective units are mutually connected by a bus (not shown).

The CPU 310 reads out and executes computer programs stored in the memory unit 320, and thereby, functions as an operating system (OS) 311, an acquisition part 312, a division part 313, an evaluation part 314, a generation part 315, and a conversion part 316. The OS 311 controls the respective units of the information processing apparatus 300 and provides a GUI (Graphical User Interface) to a user of the information processing apparatus 300.

The acquisition part 312 acquires a scenario material stored in the memory unit in the scenario generation processing to be described later. The division part 313 divides the acquired scenario material (procedure information) and generates parts in the scenario generation processing to be described later. The generated parts function as "division information", or "divided information".

The evaluation part 314 evaluates the respective divided parts in the scenario generation processing to be described later. The generation part 315 generates a scenario (new procedure information) from the divided parts based on an evaluation result in the scenario generation processing to be described later.

The conversion part 316 generates form data in the scenario generation processing to be described later. The details of the respective parts will be described later.

The memory unit 320 includes a ROM, a RAM, a DRAM, a hard disc, etc. Various computer programs including the OS are stored in the memory unit 320. Further, in the memory unit 320, a material memory part 321, an exemplar memory part 322, a standard memory part 323, and a scenario memory part 324 are stored.

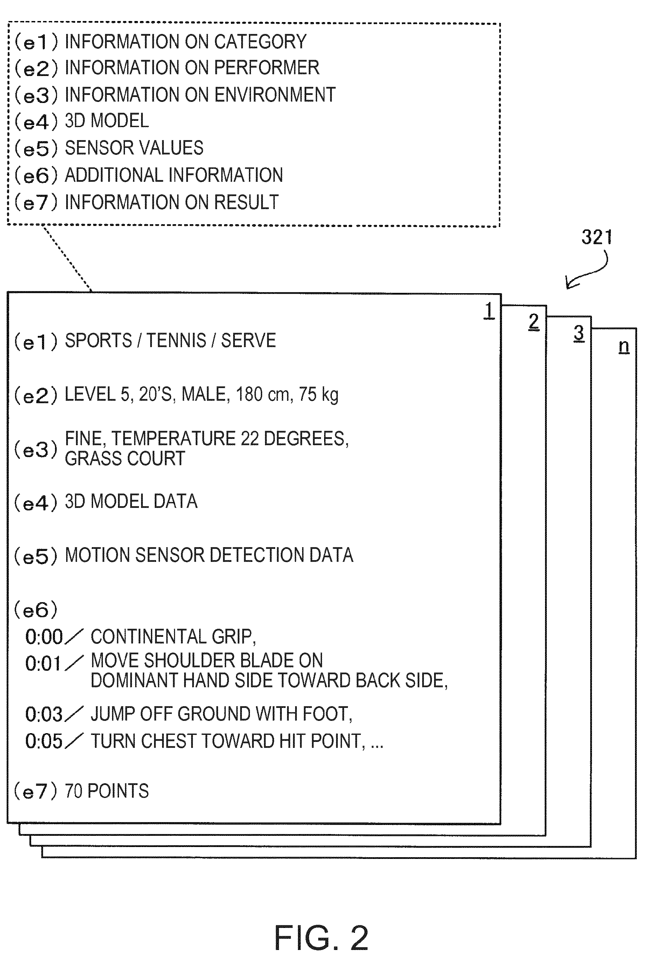

Fig. 2 is a diagram for explanation of the material memory part 321. In the material memory part 321, a plurality of scenario materials 3211 to 321n registered by various users are stored in advance. The respective scenario materials contain the following elements e1 to e7 as shown in a part surrounded by a broken line in Fig. 2.
(e1) Information on Category
(e2) Information on Performer
(e3) Information on Environment
(e4) Three-dimensional (3D) Model
(e5) Sensor Values
(e6) Additional Information
(e7) Information on Result

"Information on Category" of the element e1 is information representing a category to which a scenario material of interest belongs. The information on category may contain one or more sub-categories. For instance, the example of the scenario material 3211 shows that the scenario material 3211 belongs to the sub-category "Serve" of the sub-category "Tennis" of the category "Sports". Note that, when the scenario material is "Factory Work", the information on category of the element e1 may contain a product number, a product name, step names (modeling, preparation, processing, inspection, etc.). Further, when the scenario material is "Cooking", the information may contain a name of dish, steps in cooking procedures (preparation, preliminary arrangement, cooking, dishing up), etc.

"Information on Performer" of the element e2 is information on a performer of the scenario material of interest, specifically, a person as an original of the 3D model (model) of the element e4. The information on performer may contain one or more arbitrary items e.g. level of skill, age, sex, height, weight, affiliation, years of experience, etc. of the performer. For instance, the example of the scenario material 3211 shows that, regarding the performer of the scenario material 3211, the level of skill is "Level 5", the age is "20's", the sex is "Male", the height is "180 cm", and the weight is "75 kg".

"Information on Environment" of the element e3 is information on an environment of the scenario material of interest, specifically, an environment when the 3D model of the element e4 is performed. The information on environment may contain one or more arbitrary items e.g. weather, temperature, humidity, surface condition, instrument, tool, utensil in use, etc. For instance, the example of the scenario material 3211 shows that, regarding the environment when the scenario material 3211 is performed, the weather is "Fine", the temperature is "22 Degrees", and the surface condition is "Grass Court".

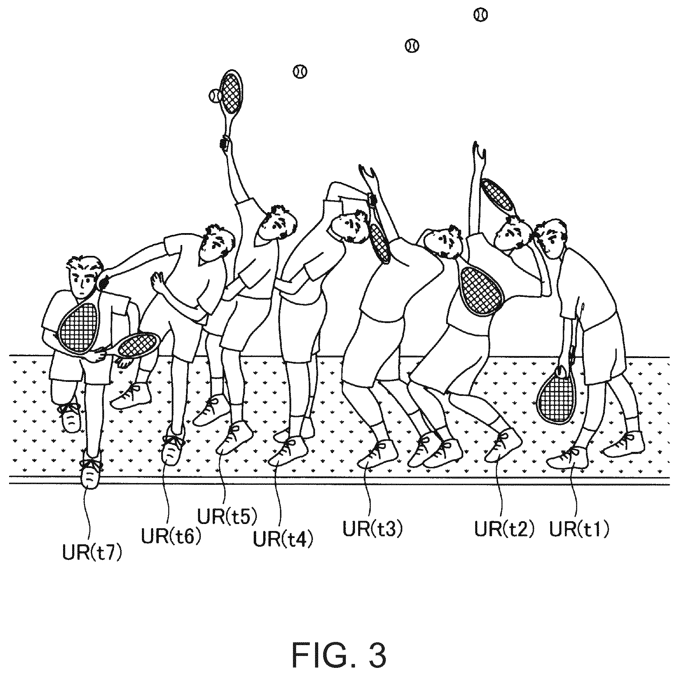

Fig. 3 is a diagram for explanation of a 3D model. "3D Model" of the element e4 in Fig. 2 is data of a 3D model with respect to the performer and surrounding real objects (objects existing in the real world). The 3D model contains information as a backbone of the scenario material of interest, time-series information with respect to motions of the performer. The 3D model is generated by e.g. a 3D-model generation part (not shown) according to the following procedures a1 to a5.
(a1) One or more visible light cameras and one or more ranging sensors are placed around the performer. The imaging range of the visible light camera and the detection range of the ranging sensor are calibrated in advance. Under the condition, the performer performs a series of motions for which a 3D model is generated. Note that the visible light camera is a camera that captures a predetermined outside scenery including a subject (performer). The ranging sensor is e.g. a depth sensor that may measure a distance to an object by applying an infinite number of infrared rays and acquiring the applied infrared rays with an infrared camera (or an infrared light receiving part). It is preferable that the numbers of the visible light cameras and the ranging sensors are larger because the accuracy is higher. The distance to the object may be measured using two or more visible light cameras in place of the ranging sensor. Or, the ranging sensor and the two or more visible light cameras may be separately used in response to the environment (the condition of outside light) of the performance.
(a2) The 3D model generation part acquires imaging data by the visible light camera and measurement data by the ranging sensor.
(a3) The 3D model generation part generates a 3D model representing at least the performer and surrounding real objects based on the acquired data. Specifically, the 3D model generation part generates contours of the 3D model by acquiring shapes of the objects within the imaging range of the visible light camera and detecting boundary lines of the objects based on the measurement data of the ranging sensor. Further, the 3D model generation part colors the parts within the contours of the generated 3D model based on RGB values within the imaging data of the visible light camera.
(a4) The 3D model generation part correlates the objects having continuous boundaries as "single object" in the 3D model using the 3D model generated in the procedure a3 and the boundary lines of the objects detected in the procedure a3. Further, the 3D model generation part performs comparison by pattern matching or a statistical identification method using models of the parts of the human body (e.g. hand, foot, head, etc.) stored in advance and recognizes the collection of the objects identified as the single object as "human body".
(a5) The 3D model generation part stores a set of the data of the 3D model generated in the procedure a3, the boundary line data representing the boundary lines of the objects detected in the procedure a3, the correlation data as the single object in the procedure a4, and the correlation data as the human body in the procedure a4 as "3D model data" in the memory unit. The 3D model data without change or converted into 2D (two-dimensional) images functions as "virtual objects" in augmented reality processing.

As a result, in the 3D model of the element e4, the 3D model data, the boundary line data, and the correlation data of the objects and the human body are stored. For instance, in the example of the scenario material 3211 shown in Fig. 3, 3D model data on a series of continuous motions with respect to "Serve of Tennis" performed by the performer UR (specifically, a series of motions of ball toss, backswing, impact, and follow-through) is stored. Note that the 3D model data also includes 3D-modelled "real objects around performer" such as a tennis racket, a tennis ball, and a court in addition to the performer UR. In the 3D model of the element e4, of the 3D model data, the boundary line data, and the correlation data of the objects and the human body, unnecessary portions (e.g. background, motionless objects, etc.) may be deleted. Further, the 3D model of the element e4 may be 3D model data on a series of motions discontinuously represented at fixed intervals such as cutoff animation. The 3D model of the element e4 may include e.g. time-series-changing icon images, pop-up images, other models, images, character strings, figures, signs, sound, other arbitrary data, etc.

"Sensor values" of the element e5 (Fig. 2) are detection values of various sensors when the 3D model is generated, in other words, when the performer performs the series of motions by which the 3D model is generated. The element e5 is time-series information incidental to the 3D model. The various sensors include e.g. a gyro sensor, an acceleration sensor, a geomagnetic sensor, a motion sensor (an integrated sensor of all of the gyro sensor, the acceleration sensor, and the geomagnetic sensor), a biological information acquisition sensor (a sensor acquiring muscular strength, a sensor acquiring pulse, a sensor acquiring perspiration, a sensor acquiring blood flow, etc.), a photosensor, an infrared sensor, an ultrasonic sensor, a gas sensor, an ion sensor, a biosensor, a temperature sensor, a humidity sensor, etc. These sensors may be placed around the performer in advance. These sensors may be placed within an apparatus that can be worn by a user such as a head mounted display apparatus or a watch.

For instance, in the example of the scenario material 3211, detection data detected by the motion sensor is stored between the series of motions with respect to "Serve of Tennis" performed by the performer UR. In the example of the scenario material 3211, only one sensor is exemplified, however, detection values of a plurality of sensors may be stored in the element e5.

"Additional Information" of the element e6 is information for addition to the series of motions by the performer, in other words, commentaries of the series of motions by the performer. The element e6 is time-series information incidental to the 3D model. The additional information may be text data, sound data, or image data. For example, the additional information is generated in the following procedure b1 or procedure b2 by an additional processing part (not shown).
(b1) Case where the performer wears an input device such as a microphone and inputs additional information in real time: While performing the series of motions by which the 3D model is generated (the above described procedure a1), the performer also dictates the commentaries of the series of motions. The additional processing part correlates and stores the oral contents voice-recognized as sound data or text-converted as text data by voice recognition with start times of the dictation.
(b2) Case where additional information is input after performance: After the performance of the series of motions (the above described procedure a1), the performer inputs the commentaries on the series of motions using input means such as a microphone or keyboard. In this regard, while reproducing the captured images of the visible light camera or 3D model data, the performer designates the times when to input the commentaries on each occasion. The additional processing part correlates and stores the input sound data, text data, and image data with the designated times. Needless to say, in (b1) and (b2) a party other than the performer may provide the commentary.

As a result, in the additional information of the element e6, the times to display the additional information (reproduce for the sound data) and the sound data, text data, and image data as the contents of the additional information are correlated and stored. For instance, in the example of the scenario material 3211 shown in Fig. 2, display of "Continental Grip" immediately after the start time (time 0:00), display of "Move Shoulder Blade on Dominant Hand Side toward Back Side" after one second from the start, display of "Jump off Ground with Foot" after three seconds from the start, and display of "Turn Chest toward Hit Point" after five seconds from the start are stored. Note that the additional information of the element e6 may be associated with the times as shown in Fig. 2, may be associated with the motions (body motions) of the user, or may be associated with the states of the real objects.

"Information on Result" of the element e7 is information on a result of the series of motions by the performer. The information on result may be any information including at least one (or more) of e.g. a result of self-scoring by the performer, a result of scoring by a third person different from the performer, a measurement result (flying distance, dimension, weight, or the like), a test result (pass, fail, yield), etc. For instance, the example of the scenario material 3211 shows that the result of self-scoring by the performer is 70 points.

In the exemplar memory part 322 in Fig. 1, exemplary scenario materials respectively corresponding to the categories of the element e1 of the material memory part 321 are stored in advance. For example, if 100 kinds of categories are present in the material memory part 321,100 exemplary scenario materials respectively corresponding to the 100 kinds of categories are stored in the exemplar memory part 322.

The exemplary scenario material contains the above described elements e1 to e7 like the scenario material of the material memory part 321. Further, of the exemplary scenario material, at least part containing time-series information, specifically, the 3D model of the element e4 is chronologically divided in advance. In the embodiment, "time-series information" represents various kinds of information including models, images, character strings, figures, signs, sound, other data, etc. continuously or discontinuously at fixed intervals. The explanation is made on the assumption that Fig. 3 shows a 3D model of the exemplary scenario material. The 3D model data of the exemplary scenario material is chronologically divided into 3D model data at time t1, 3D model data at time t2, 3D model data at time t3, ..., 3D model data at time t7. The divided respective 3D models function as "exemplary division information".

Here, "division" may be actual division of the 3D model itself into separate data or the 3D model may contain information on division points (e.g. division times). Note that, in the exemplary scenario material, the elements e1 to e3 and e5 to e7 may be omitted.

In the standard memory part 323 in Fig. 1, information for checking whether or not the motions contained in the scenario material are standard motions is stored in advance. The standard motions refer to motions determined as "standards" by a voluntary organization (a company, a standards organization, or the like) and a voluntary standard. In the standard memory part 323, at least one (or more) model of instrument, tool, utensil, or the like used in the motion determined as a standard is stored.

The scenario memory part 324 is an area for storage of scenarios generated by scenario generation processing to be described (new procedure information).

### A-2. Scenario Generation Processing:

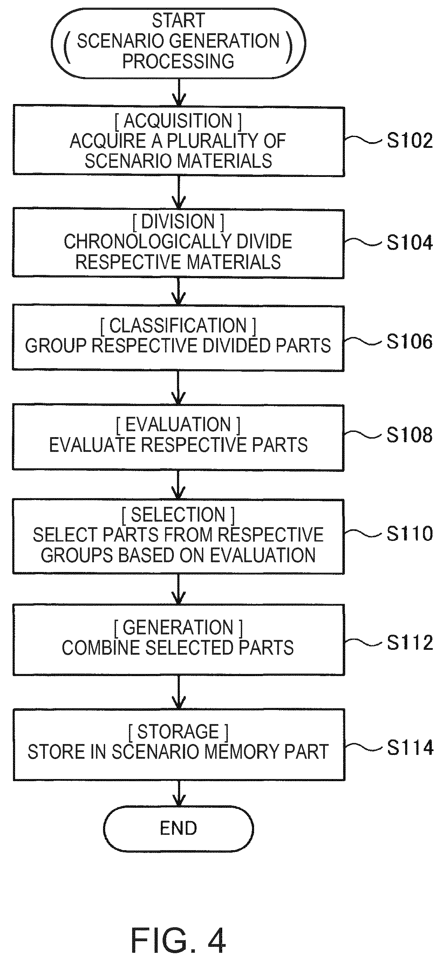

Fig. 4 is a flowchart showing procedures of scenario generation processing. The scenario generation processing is processing of evaluating a scenario material and generating a new scenario based on an evaluation result. The scenario generation processing is executed by cooperation of the acquisition part 312, the division part 313, the evaluation part 314, and the generation part 315. The start trigger of the scenario generation processing may be arbitrarily determined. For example, in the embodiment, a processing start request from a user via the OS 311 or another application is used as the start trigger of the scenario generation processing. When the processing start request is made, the user designates a sub-category desired for scenario generation.

At step S102, the acquisition part 312 acquires a plurality of scenario materials to be processed. Specifically, the acquisition part 312 searches the material memory part 321 by the sub-category designated by the user when the processing start request is made, and acquires all of the matching scenario materials.

At step S104, the division part 313 respectively chronologically divides at least part containing time-series information of the acquired plurality of scenario materials, specifically, the 3D models of the elements e4. Specifically, the division part 313 repeatedly executes the processing of dividing the scenario material using the method shown in one of the following c1 to c3 with respect to all acquired scenario materials.

### (c1) Division by Exemplary Scenario Material

The division part 313 searches the exemplar memory part 322 by the sub-category designated by the user when the processing start request is made, and acquires one matching exemplary scenario material. As described above, the 3D model of the exemplary scenario material is chronologically divided in advance. The division part 313 compares the 3D model (element e4) of the exemplary scenario material and the 3D model (element e4) of the scenario material to be divided using pattern matching or a statistical identification method, and divides the 3D model of the scenario material to be divided according to the points at which the 3D model of the exemplary scenario material is divided.

According to the method c1, the division part 313 may easily divide the scenario material (procedure information) by comparison with the previously divided 3D model (exemplary division information).

### (c2) Division by Magnitude of Motion:

The division part 313 divides the 3D model of the scenario material to be divided at the time when an amount of change of the magnitude of the motion of the human body within the 3D model (element e4) of the scenario material to be divided is equal to or more than a predetermined threshold value. Note that the division part 313 uses correlation data as a human body for identification of "human body" from the plurality of objects contained in the 3D model.

In the scenario material representing a series of motion procedures (procedure information), one procedure may be separated from another procedure in a part in which the motion largely changes. According to the method c2, the division part 313 may divide the scenario material in the part in which the motion largely changes for the above described case.

### (c3) Division by Increase or Decrease of Objects:

The division part 313 divides the 3D model of the scenario material to be divided at the time when the objects within the 3D model (element e4) of the scenario material to be divided are increased or decreased. Note that the division part 313 uses correlation data as a single object for identification of "objects" contained in the 3D model.

In the scenario material representing a series of motion procedures (procedure information), one procedure may be separated from another procedure in a part in which a new object is added or in a part in which the object disappears, i.e., the objects are increased or decreased. According to the method c3, the division part 313 may divide the scenario material in the part in which the objects are increased or decreased for the above described case.

Note that "division" in the procedures c1 to c3 may be actual division of the 3D model itself into separate data or the 3D model may contain information on division points (e.g. division times). Hereinafter, the 3D model of the scenario material divided at step S104 is simply referred to as "part" or "division information".

For example, assuming that ten scenario materials are acquired at step S102 and the respective scenario materials are divided in seven at step S104, 10 x 7 = 70 parts are generated at the end of step S104.

At step S106 in Fig. 4, the evaluation part 314 groups the respective divided parts. Specifically, first, the evaluation part 314 groups the respective divided parts on the condition that "whether or not the parts belong to the same time series" (that is, whether they belong to the same place in time, which may be determined in sequential or absolute terms). When numbers are assigned to the respective parts in the order of division, "the parts belonging to the same time series" refer to parts having the same numbers. As a result, for example, when ten scenario materials are acquired at step S102 and the respective scenario materials are divided in seven at step S104, seven groups each containing ten parts are obtained.

Then, at step 106 in Fig. 4, the evaluation part 314 further groups the respective grouped parts on one or more arbitrary conditions and forms sub-groups. The arbitrary conditions may be any conditions that enables filtering using the element e2 or the element e3 e.g. level of skill of the performer, age, sex, weather, temperature, etc. As a result, for example, two sub-groups such as "male" and "female" are formed in the respective seven groups.

At step S108 in Fig. 4, the evaluation part 314 evaluates the respective parts. Specifically, the evaluation part 314 evaluates the respective parts with reference to at least one of the following d1 to d7. The criteria d1 to d7 may be used singly or in combination.

### (d1) Evaluation by Exemplary Scenario Material:

The evaluation part 314 searches the exemplar memory part 322 by the sub-category designated by the user when the processing start request is made, and acquires one matching scenario material. The evaluation part 314 extracts a 3D model corresponding to the part to be evaluated, i.e., a 3D model belonging to the same time series from the acquired 3D models (elements e4) of the exemplary scenario materials. The evaluation part 314 compares the extracted 3D models and the parts to be evaluated using pattern matching or a statistical identification method, and obtains the degrees of matching between them. According to the criterion d1, the higher the degree of matching, the higher the evaluation.

According to the criterion d1, the evaluation part 314 may simply and easily evaluate the parts (division information) by comparison with the previously divided 3D models (exemplary division information) of the exemplary scenario material.

### (d2) Evaluation by Whether or Not Standard Motion Procedure:

The evaluation part 314 compares the parts to be evaluated with respective models of instrument, tool, utensil, or the like stored in the standard memory part 323 using pattern matching or a statistical identification method. The evaluation part 314 evaluates the parts to be evaluated "to correspond to the standard motion procedure" if the parts to be evaluated includes at least one of the models stored in the division part 313, and evaluates that the parts to be evaluated "not to correspond to the standard motion procedure" if not. According to the criterion d2, the evaluations include two of standard and non-standard.

According to the criterion d2, the evaluation part 314 may evaluate whether or not the parts (division information) include standard motions using the standard memory part 323. The evaluation result by the criterion d2 is useful when the user generates a standard scenario by the scenario generation processing and in generation of a work standard document, which will be described later.

### (d3) Evaluation by Performance Result:

The evaluation part 314 acquires a measurement result and a test result from information on result (element e7) of the scenario material as the original of the parts to be evaluated, and uses them as an evaluation result by the criterion d3. According to the criterion d3, the evaluation part 314 may evaluate the parts (division information) to be evaluated using the final result obtained after the series of motions including e.g. the measurement result and the test result.

### (d4) Evaluation by Scoring Result of User:

The evaluation part 314 acquires scoring results by the user of the parts to be evaluated from the user via the input/output unit 360. The evaluation part 314 uses the acquired scoring result by the user as an evaluation result by the criterion d4. According to the criterion d4, the evaluation part 314 may evaluate the parts (division information) to be evaluated as intended by the user.

### (d5) Evaluation by Image Recognition Result:

The evaluation part 314 image-recognizes 3D model data within the parts to be evaluated (3D model of the divided scenario material), and extracts a texture. The evaluation part 314 uses the extracted texture pattern as an evaluation result by the criterion d5. For example, the evaluation part 314 may highly evaluate the texture when the texture is even and lowly evaluate the texture when the texture is uneven. According to the criterion d5, the evaluation part 314 may evaluate the parts (division information) to be evaluated internally by image recognition without the need of information on result of the scenario material (element e7), the scoring result by the user, or the like.

### (d6) Evaluation by Scoring Result of Performer:

The evaluation part 314 acquires the result of the self-scoring by the performer from the information on result (element e7) of the scenario material as the original of the parts to be evaluated, and uses the result as an evaluation result by the criterion d6. According to the criterion d6, the evaluation part 314 may evaluate the parts (division information) to be evaluated as intended by the performer (the creator of the procedure information).

### (d7) Evaluation by Other Parts:

The evaluation part 314 extracts the parts belonging to the same time series as that of the parts to be evaluated (hereinafter, also referred to as "other parts") from the parts grouped at step S106. The evaluation part 314 averages the extracted other parts using pattern matching or a statistical identification method. The evaluation part 314 compares the data in which the other parts are averaged with the parts to be evaluated, and obtains the degrees of matching between them. By the criterion d7, the higher the degree of matching, the higher the evaluation.

According to the criterion d7, the evaluation part 314 may internally evaluate the parts (division information) to be evaluated by comparison with the other parts (division information).

At step S110 in Fig. 4, the generation part 315 selects parts one by one from each group (if sub-groups exist, one by one from each sub-group) based on the evaluation result at step S108. Specifically, the generation part 315 may select parts using the following methods f1 to f3. Note that the generation part 315 does not select parts of the scenario material in the different number of parts obtained by division at step S104 from that of the other scenario material.
(f1) When the evaluation criterion d1 or d3 to d7 is used at step S108, the generation part 315 selects one part with the highest evaluation within each group (or sub-group).
(f2) When the evaluation criterion d2 is used at step S108, the generation part 315 selects one part as the standard within each group (or sub-group).
(f3) When a plurality of parts are candidates in the methods f1, f2, the generation part 315 may select one part using the evaluation result by the other criterion (d1 to d7).

At step S112 in Fig. 4, the generation part 315 combines the selected parts in the chronological order and generates a new scenario. In this regard, the generation part 315 may perform smoothing processing on the 3D model data for natural appearance of the connecting portion between the parts. The generation part 315 may perform processing of averaging sizes and colors (hue, saturation, brightness) of the objects within the 3D model data contained in one part and sizes and colors of the objects within the 3D model data contained in other parts. Further, if a command of changing the order of combination of the parts is acquired from the user via the input/output unit 360, the generation part 315 changes the order of combination of the parts as commanded.

At step S114 in Fig. 4, the generation part 315 stores the scenario generated at step S112 in the scenario memory part 324 and ends the processing. The scenarios stored in the scenario memory part 324 include at least the information on category (element e1) and the 3D model (element e4). In addition, the scenarios stored in the scenario memory part 324 may include the sensor values (e5), the additional information (e6), the conditions of sub-grouping at step S106, the evaluation criteria at step S108, the evaluation results at step S108, etc.

As described above, according to the scenario generation processing of the embodiment, the generation part 315 selects e.g. one piece of division information determined to be optimal in response to the evaluation result at step S108 from the collection (group) of the division, or divided, information (parts) of the same time series of a plurality of pieces of existing procedure information (a plurality of scenario materials), and combines the selected division information and generates new procedure information (scenario). As a result, the generation part 315 may generate one better piece of new procedure information from the plurality of pieces of existing procedure information.

Further, according to the scenario generation processing of the embodiment, the generation part 315 selects e.g. one piece of division information determined to be optimal in response to the evaluation result at step S108 from the subordinate collection (sub-group) formed by classification (grouping) of the collection (group) of the division information (parts) of the same time series according to at least one or more conditions. As a result, the part may select division information that should be used as a material of new procedure information more carefully.

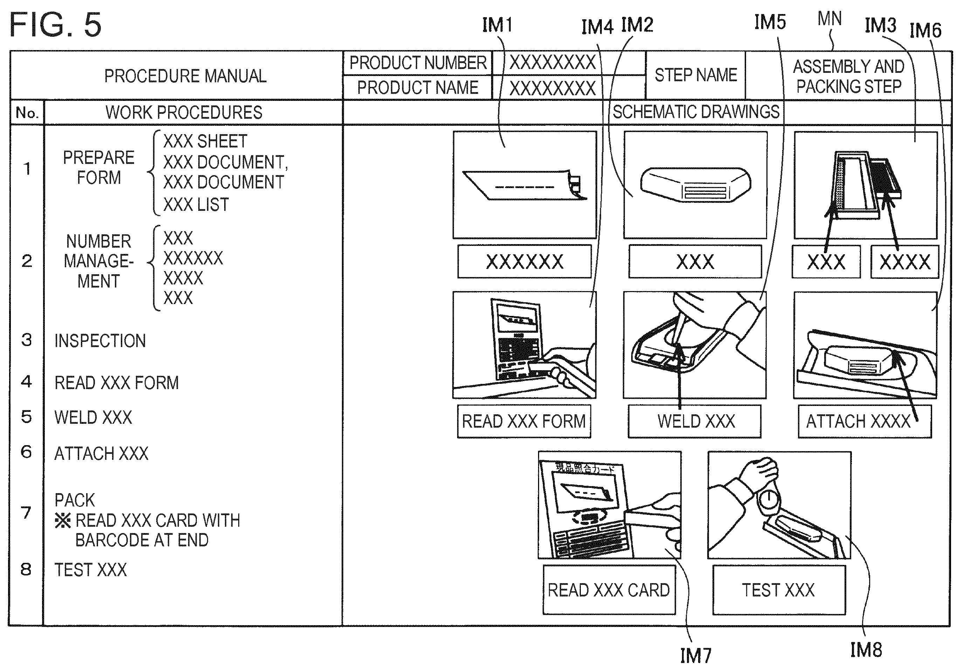

Fig. 5 shows an example of a form generated by the conversion part 316. The conversion part 316 may generate a procedure manual MN exemplified in Fig. 5 using the scenario stored in the scenario memory part 324. The procedure manual MN contains a product number field, a product name field, a step name field, a work procedure field, and a schematic drawing field.

The conversion part 316 extracts contents of the product number field, the product name field, and the step name field from the information on category (element e1) of the scenario. The conversion part 316 extracts contents of the work procedure field from the additional information (element e6) of the scenario. The conversion part 316 extracts images IM1 to IM8 of the schematic drawing field from the 3D model (element e4) of the scenario.

In this manner, the conversion part 316 may automatically generate a form (procedure manual) from the scenario stored in the scenario memory part 324, and thereby, convenience in the user is improved. For example, on the basis of the scenario evaluated and selected based on the criterion d2 (evaluation by whether or not standard motion procedure) at step 108 of the scenario generation processing (Fig. 4), the form generated by the conversion part 316 may be used as "work standard document".

### A-3. Scenario Display Processing:

The scenario generated as described above can be executed (reproduced) by e.g. a head mounted display apparatus.

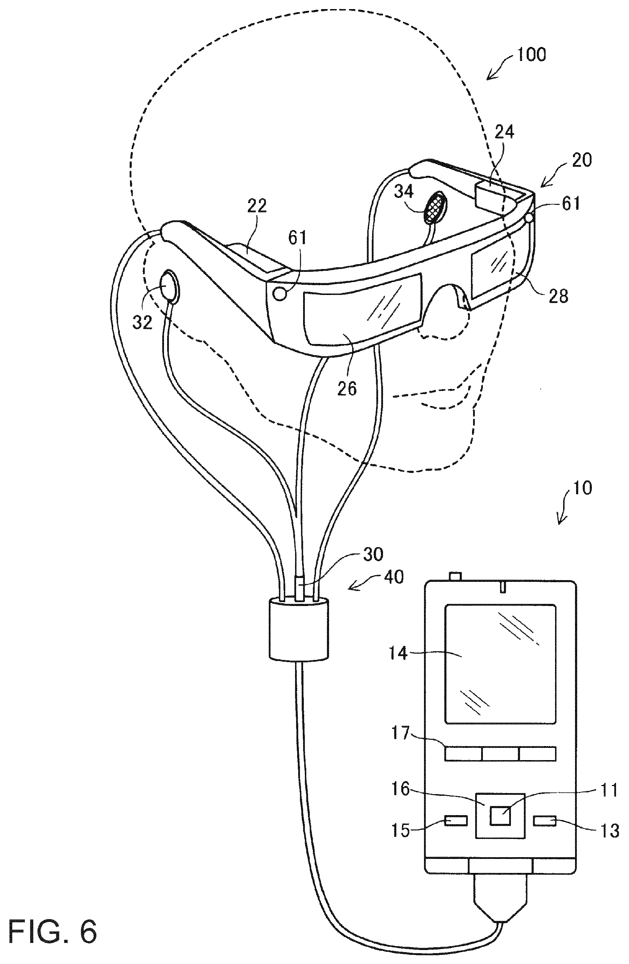

Fig. 6 is a diagram for explanation of an appearance configuration of a head mounted display apparatus. The head mounted display apparatus 100 of the embodiment is a display apparatus worn on a head and also called a head mounted display (HMD). The HMD 100 is a light-transmissive, or optical see-through, head mounted display by which a user can visually recognize a virtual image and directly visually recognize an outside scenery at the same time. The HMD 100 includes an image display unit 20 worn on the head of the user for the user to visually recognize a virtual image and a control unit 10 that controls the image display unit 20.

The image display unit 20 is an attachment body attached to the head of the user and has a spectacle shape. The image display unit 20 includes a right display drive part 22, a left display drive part 24, a right optical image display part 26, a left optical image display part 28, and cameras 61.

The right optical image display part 26 and the left optical image display part 28 are provided to be positioned before right and left eyes of the user when the user wears the image display unit 20, respectively. The right display drive part 22 and the left display drive part 24 are provided on a side opposed to the head of the user when the user wears the image display unit 20.

The display drive parts 22, 24 are formed by liquid crystal displays. The optical image display parts 26, 28 as optical members include light guide plates and dimmer plates. The light guide plate is formed using a light-transmissive resin material or the like and guides image lights output from the display drive parts 22, 24 to the eyes of the user. The dimmer plate is an optical device having a thin plate shape and provided to cover the front side of the image display unit 20 at the opposite side to the eye of the user.

The cameras 61 are provided in positions corresponding to the glabella of the user when the user wears the image display unit 20. Accordingly, the cameras 61 image the outside scenery as a scenery outside in the direction of the line of sight of the user and acquires a captured image as an imaged image.

The image display unit 20 further has a connecting part 40 for connecting the image display unit 20 to the control unit 10. A part of the connecting part 40 extends to a right earphone 32 and a left earphone 34. As cords forming the connecting part, e.g. metal cables or optical fibers may be employed. The image display unit 20 and the control unit 10 perform transmission of various signals via the connecting part 40.

The control unit 10 is a device for controlling the HMD 100. The control unit 10 is an operation unit including a plurality of keys 11, 13, 15, 16, 17, and a track pad 14. The plurality of keys of the control unit 10 detect press-down operations and transmit control signals corresponding to the pressed down keys to the image display unit 20. The track pad 14 of the control unit 10 detects operations of fingers of the user on the operation screen of the track pad 14 and outputs signals corresponding to the detected contents.

The control unit 10 has a CPU (not shown) that controls the image display unit 20. The CPU reads out and executes computer programs stored in a memory unit (not shown), and thereby, executes scenario display processing having procedures g1 to g6.
(g1) The CPU acquires a scenario to be executed (reproduced) via a wireless communication unit or wired communication unit (not shown) from the information processing apparatus 300.
(g2) The CPU acquires an outside scenery image by the cameras 61.
(g3) The CPU detects real objects associated with virtual objects of the scenario to be executed (hereinafter, also referred to as "target objects") from real objects contained in the outside scenery image acquired in the procedure g2. For the detection, the CPU may use a table in which information for identification of the real objects (e.g. names) and information for identification of the virtual objects are associated. The table is stored in a memory unit 120 of the HMD 100 in advance. The table may be automatically generated by the CPU using the outside scenery imaged by the cameras 61. Or, the table may be generated or edited by the user of the HMD 100. In order to enable generation or editing of the table by the user, the CPU may sense a gesture of the user using the cameras 61 and acquire operation input by a command associated with the gesture, or voice-recognize vocal contents of the user input from a microphone. Further, the CPU may detect only a specific object (e.g. a real object held by the hand of the user) of the real objects contained in the outside scenery image as a detection target of the procedure g3. In this manner, the CPU may efficiently detect the real objects.
(g4) The CPU acquires the position of the target object. Here, "position" includes a distance from the user and positions in the horizontal direction and the vertical direction within the sight of the user. In this regard, the CPU may calculate the position of the target object using two or more outside scenery images acquired by the cameras 61 as stereo cameras. Or, the CPU may calculate the position of the target object using one or more outside scenery images acquired by the cameras 61 and various sensors (not shown) e.g. a depth sensor, a ranging sensor, or the like.
(g5) The CPU generates image data in which the virtual object (element e4) and the additional information (element e6) of the scenario to be executed are placed according to the position of the target object acquired in the procedure g4. For the alignment, the CPU may use a feature part (edge or the like) of the target object or a mark such as a marker attached to the target object. Further, the CPU may perform image processing of enlargement, reduction, rotation, color conversion, etc. on the virtual object when the virtual object is placed.
(g6) The CPU allows the optical image display parts 26, 28 of the image display unit 20 to display images based on the generated image data.

As described above, according to the scenario display processing of the embodiment, the user of the HMD 100 sees both the real objects existing in the real world and the virtual objects displayed as virtual images on the optical image display parts 26, 28, and thereby, may feel augmented reality. Further, the virtual objects of the embodiment are information used for teaching of the series of motion procedures to the user. Accordingly, according to the scenario display processing of the embodiment, work support using the technology of augmented reality may be provided to the user.

### B. Second Embodiment:

In the second embodiment of the invention, a configuration with different scenario generation processing will be explained. As below, only parts having different configurations and operations from those of the first embodiment will be explained. Note that, in the drawings, the same signs as those of the above described first embodiment are assigned to the same configurations and operations as those of the first embodiment and their detailed explanation will be omitted. That is, the configurations and operations not to be described are the same as those of the above described first embodiment.

### B-1. Configuration of Information processing apparatus:

The configuration of the information processing apparatus in the second embodiment is the same as that of the first embodiment shown in Fig. 1. Note that, in the information processing apparatus 300 of the second embodiment, the processing of the scenario generation processing executed by the acquisition part 312, the division part 313, the evaluation part 314, and the generation part 315 is different from that of the first embodiment shown in Fig. 4.

### B-2. Scenario Generation Processing:

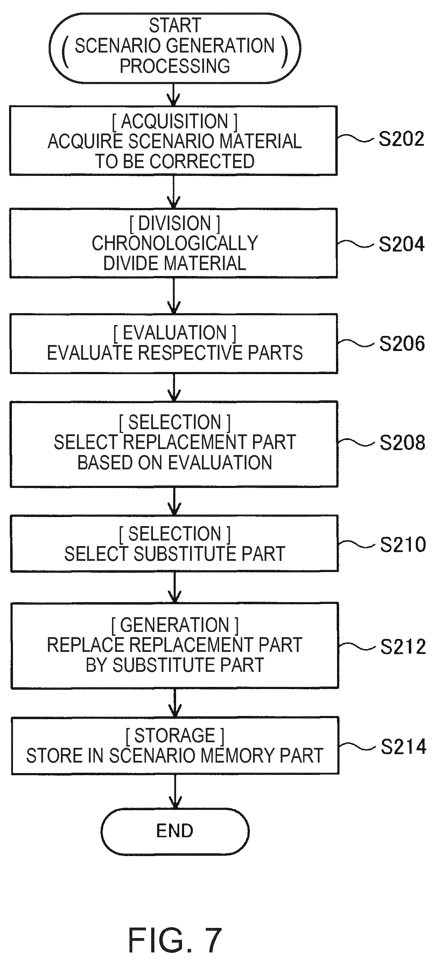

Fig. 7 is a flowchart showing procedures of scenario generation processing in the second embodiment. The scenario generation processing of the second embodiment is processing of evaluating one scenario material as a basis, replacing a part of the scenario material based on an evaluation result, and generating a new scenario. The scenario generation processing of the second embodiment is executed by cooperation of the acquisition part 312, the division part 313, the evaluation part 314, and the generation part 315. The start trigger of the scenario generation processing is the same as that of the first embodiment. In the second embodiment, when the processing start request of the scenario generation processing is made, a user designates one scenario material as a basis.

At step S202, the acquisition part 312 acquires one scenario material designated by the user (hereinafter, also referred to as "basic scenario material") from the material memory part 321. At step S204, the division part 313 chronologically divides at least part containing time-series information of the acquired basic scenario material. The specific division methods are the same as the above described methods c1 to c3. At step S206, the evaluation part 314 evaluates the respective divided parts. The specific evaluation criteria are the same as the above described criteria d1 to d7.

At step S208, the generation part 315 selects a replacement part (that is, a part to be replaced) from the respective parts of the basic scenario material based on the result of the evaluation at step S206. Specifically, the generation part 315 may select the part to be replaced using the following methods h1, h2. Note that no part to be replaced may be selected or a plurality of parts to be replaced may be selected.
(h1) When the evaluation criterion d1 or d3 to d7 is used at step S206, the generation part 315 selects a part with a lower evaluation result than a predetermined threshold value as a part to be replaced.
(h2) When the evaluation criterion d2 is used at step S206, the generation part 315 selects a part evaluated to be non-standard as a part to be replaced.

At step S210, the generation part 315 selects a substitute part as a substitute for the part to be replaced. Specifically, the generation part 315 searches the exemplar memory part 322 by the same sub-category as that of the basic scenario material and acquires one matching exemplary scenario material. The generation part 315 extracts a 3D model corresponding to the part to be replaced, i.e., a 3D model belonging to the same time series from the acquired 3D models (elements e4) of the exemplary scenario materials. The generation part 315 selects the extracted 3D model as the substitute part. When there are a plurality of parts to be replaced, the generation part 315 repeats the processing.

At step S212, the generation part 315 replaces the part to be replaced selected at step S208 with the substitute part selected at step S210, and generates a new scenario. In this regard, the generation part 315 may perform smoothing processing on the 3D model data for natural appearance of the connecting portion between the parts. Further, if a command of changing the order of combination of the parts is acquired from the user via the input/output unit 360, the generation part 315 changes the order of combination of the parts as commanded.

At step S214, the generation part 315 stores the scenario generated at step S212 in the scenario memory part 324 and ends the processing.

As described above, according to the scenario generation processing of the second embodiment, the generation part 315 replaces at least part of division information (replacement part) contained in one piece of existing procedure information (basic scenario material) by exemplary division information (substitute part) in response to the evaluation result at step S206, and thereby, generates new procedure information (scenario). As a result, the generation part 315 may correct one piece of existing procedure information using the exemplary procedure information.

### B-3. Scenario Display Processing:

Scenario display processing in the second embodiment is the same as that of the first embodiment shown in Fig. 6.

As described above, according to the scenario generation processing of the first and second embodiments, at step S108 or step S206, the evaluation part 314 may evaluate the procedure information (scenario material) acquired by the acquisition part, and, at step S112 or step S212, the generation part 315 may generate new procedure information (scenario) based on the evaluation result. The procedure information is information representing a series of motion procedures using virtual objects. Accordingly, the information processing apparatus 300 may generate new procedure information (new motion procedures) from existing procedure information (existing motion procedures). Further, the new procedure information is generated based on the evaluation result, and therefore, reliability of the procedure information used for teaching to the user may be improved.

### C. Modified Examples:

In the above described embodiments, part of the configuration implemented by hardware may be replaced by software, and, conversely, part of the configuration implemented by software may be replaced by hardware. In addition, the following modified examples can be made.

### Modified Example 1:

In the above described embodiments, the configuration of the information processing apparatus is exemplified. However, the configuration of the information processing apparatus can be arbitrarily determined without departing from the scope of the invention. For example, addition, deletion, conversion, etc. of the respective configuration parts may be made.

For example, the information processing apparatus may be implemented by another processing apparatus than the personal computer, e.g. a smartphone, a server apparatus, a projector, or the like. Further, for example, the information processing apparatus may be implemented as a head mounted display apparatus with all of its functions incorporated into the head mounted display apparatus.

For example, the information processing apparatus may include a 3D model generation part that can generate "3D model" of the element e4 of the scenario material. For example, the information processing apparatus may not include the conversion part.

For example, at least part of the respective memory parts provided in the information processing apparatus (the material memory part, the exemplar memory part, the standard memory part, the scenario memory part) may be stored in an external device (NAS, server, or the like) connected to the information processing apparatus via a network.

For example, the respective processing parts provided in the information processing apparatus (the acquisition part, the division part, the evaluation part, the generation part, the conversion part) may be formed using an ASIC (Application Specific integrated Circuit) designed for implementation of the functions.

### Modified Example 2:

In the above described embodiments, the examples of the scenario generation processing and the scenario display processing are shown. However, the procedures of the processing shown in the embodiments are just the examples, and various modifications may be made. For example, part of the steps may be omitted or other steps may be added. The order of the steps to be executed may be changed.

For example, at step S104 of the scenario generation processing, the division part may use another division method in place of division of at least part containing time-series information of the scenario material. For example, the division part may divide part of data of which the scenario material consists (sound data contained in the 3D model and the additional information, the additional information itself, the specific area within the 3D model). In this manner, the same advantages as those of the embodiments may be obtained.

For example, at step S106 of the scenario generation processing, the creation of sub-groups may be omitted.

For example, at step S108 of the scenario generation processing, the evaluation part may perform an evaluation according to whether or not the motion procedures are the standard motion procedures (criterion d2) without the information stored in the standard memory part. Specifically, the evaluation part may evaluate the parts to be evaluated "to correspond to the standard motion procedure" if a word "standard" or a word similar thereto is stored in the additional information of the element e6.

For example, at steps S112, S212 of the scenario generation processing, when generating a new scenario by combining the selected parts, the generation part may add information on editing to the new scenario. As the information on editing, e.g. the following information may be employed.
* Information representing scenario materials from which respective parts have been extracted (steps S112, S212)
* Distinction whether respective parts are parts of scenario materials to be corrected or substitute parts (step S212)

For example, after steps S114, S214 of the scenario generation processing, the generation part may provide a confirmation function of a new scenario by the user. The confirmation function may include e.g. the following functions.
* Reproduction of the new scenario
* If there is information on editing in the new scenario, display of the information
* Regeneration of a scenario according to a command of the user (execute steps S102 to S114 or S202 to S214 again. In the second generation, employment of a different condition from that of the first generation may be controlled)
* Stop of scenario generation processing according to a command of the user

For example, in the procedures g5, g6 of the scenario display processing, the CPU of the HMD may not necessarily display all of the virtual objects contained in the scenario to be executed on the image display unit. For example, the CPU may change the number of virtual objects to display via the procedures g5, g6 in response to the level of skill of the user of the HMD. Specifically, the CPU may display the larger number of virtual objects contained in the scenario to be executed as the level of skill of the user of the HMD is lower, and may display the smaller number of virtual objects contained in the scenario to be executed as the level of skill of the user of the HMD is higher.

For example, in the scenario display processing, the CPU of the HMD may image-recognize the outside scenery images acquired by the cameras and automatically select and acquire the scenario to be executed. In this regard, for example, the CPU may select the scenario to be executed based on a specific object of the real objects contained in the outside scenery images (e.g. the real object held by the hand of the user).

### Modified Example 3:

In the above described embodiments, the configuration of the HMD is exemplified. However, the configuration of the HMD can be arbitrarily determined without departing from the scope of the invention. For example, addition, deletion, conversion, etc. of the respective configuration parts may be made.

For example, the left and right optical image display parts of the image display unit may be formed to be smaller than the optical members of the embodiments. It is sufficient that the optical image display parts are placed near the eyes of the user. The sizes of the optical members forming the optical image display part are arbitrary, and the optical image display part may cover only a part of the eye of the user, in other words, the optical image display part may not completely cover the eye of the user.

For example, the HMD is the binocular transmissive HMD, however, a monocular HMD may be employed. For example, a non-transmissive HMD that blocks transmission of the outside scenery when the user wears the HMD or a video see-through display with a camera on the non-transmissive HMD may be employed. For example, the HMD may include an image display unit in another form such as an image display unit worn like a cap, or an image display unit built in a body protector including a hard hat in place of the image display unit worn like spectacles. For example, the HMD may be formed as a head-up display (HUD) mounted in a vehicle such as an automobile, an airplane, or the like or other means of transportation.

### Modified Example 4:

The invention may be implemented in various configurations without departing from the scope of the invention, not limited to the above described embodiments, examples, and modified examples. For example, the technical features in the embodiments, examples, and modified examples corresponding to the technical features in the respective aspects described in SUMMARY can be replaced and combined for solving part or all of the above described problems or achieving part or all of the above described advantages. Further, the technical features can be appropriately deleted unless the technical features are explained as essential in the specification.

## Claims

1. An information processing apparatus (300) comprising:
an acquisition part (312) configured to acquire procedure information as information representing a series of motion procedures using virtual objects for being additionally displayed to a real world;
a division part (313) configured to generate divided information formed by chronological division of at least part containing time-series information of the acquired procedure information;
an evaluation part (314) configured to evaluate each of the divided information; and
a generation part (315) configured to generate new procedure information from the divided information based on a result of the evaluation.

2. The information processing apparatus according to claim 1, wherein the acquisition part (312) is configured to acquire a plurality of pieces of the procedure information,
the division part (313) is configured to respectively chronologically divide at least part containing time-series information of the acquired plurality of pieces of the procedure information, and
the generation part (315) is configured to select one piece of the divided information in response to the result of the evaluation from a collection of the divided information of the same time series, and to generate new procedure information by combining the selected divided information.

3. The information processing apparatus according to claim 2, wherein the generation part (315) is configured to select one piece of the divided information in response to the result of the evaluation from a subordinate collection formed by classification of the collection of the divided information of the same time series according to at least one or more conditions, and to generate new procedure information by combining the selected divided information.

4. The information processing apparatus according to anyone of the preceding claims, further comprising an exemplar memory part (322) that stores exemplary divided information as information formed by chronological division of at least part containing time-series information of exemplary procedure information,
wherein the acquisition part (312) is configured to acquire ae piece of the exemplary divided information, and
the generation part generates new procedure information by replacing at least part of the divided information with the corresponding exemplary divided information in response to the result of the evaluation.

5. The information processing apparatus according to anyone of the preceding claims, further comprising an exemplar memory part (322) that stores exemplary divided information as information formed by chronological division of at least part containing time-series information of exemplary procedure information,
wherein the evaluation part (314) is configured to evaluate the divided information by comparison with the corresponding exemplary divided information.

6. The information processing apparatus according to anyone of the preceding claims, further comprising a standard memory part (323) that stores at least one piece of standard information as information used for checking of standard motions,
wherein the evaluation part (314) is configured to evaluate the divided information according to whether or not the standard information stored in the standard memory part is contained within the divided information.

7. The information processing apparatus according to anyone of the preceding claims, wherein the evaluation part (314) is configured to evaluate the divided information using at least one of a result of the motions according to the procedure information, a scoring result by a user of the information processing apparatus, a result of image recognition of the virtual objects, and a self-scoring result of a creator of the procedure information.

8. The information processing apparatus according to claim 2, wherein the evaluation part (314) is configured to evaluate the divided information using a comparison result with the other divided information within the collection of the divided information of the same time series.

9. The information processing apparatus according to anyone of the preceding claims, further comprising an exemplar memory part (322) that stores exemplary divided information as information formed by chronological division of at least part containing time-series information of exemplary procedure information,
wherein the division part (313) is configured to divide at least part containing time-series information of the acquired procedure information by comparison with the exemplary divided information.

10. The information processing apparatus according to any one of the preceding claims, wherein the division part (313) is configured to divide at least part containing time-series information of the acquired procedure information according to magnitudes of the motions in the procedure information.

11. The information processing apparatus according to any one of the preceding claims, wherein the division part (313) is configured to divide at least part containing time-series information of the acquired procedure information according to increases or decreases of the virtual objects in the procedure information.

12. A method of controlling an apparatus comprising:
(S102) acquiring procedure information as information representing a series of motion procedures using virtual objects for being additionally displayed to a real world;
(S104) generating divided information formed by chronological division of at least part containing time-series information of the acquired procedure information;
(S108) evaluating each of the divided information; and
(S112) generating new procedure information from the divided information based on a result of the evaluation.

13. A computer program allowing a computer to implement:
a function (S102) of acquiring procedure information as information representing a series of motion procedures using virtual objects for being additionally displayed to a real world;
a function (S104) of generating divided information formed by chronological division of at least part containing time-series information of the acquired procedure information;
a function (S108) of evaluating each of the divided information; and
a function (S112) of generating new procedure information from the divided information based on a result of the evaluation.
